# EUROPEAN PATENT APPLICATION

(11) **EP 4 047 698 A1**
(43) Date of publication of application: **24.08.2022**
(21) Application number: 21315026.1
(22) Date of filing: 23.02.2021
(51) Int. Cl.: H01M 8/0606, B01D 53/22, C01B 13/02, H01M 8/18

(54) **PROCESS FOR PRODUCING ELECTRICAL ENERGY WITH A FUEL CELL**

(71) Applicant: Ultra High Temperature Processes Ltd, DO4C3W4 Dublin 4 (IE)
(72) Inventor: Nils, Kongmark, 01630 Saint-Genis-Pouilly (FR)
(74) Representative: Stona, Daniel

(57) **Abstract**

The invention relates to a process for producing electrical energy with a fuel cell having an improved efficiency.

The particularity of such a process is that its source of oxygen is a source of pure oxygen, like the oxygen from a device for splitting water into hydrogen and oxygen by thermolysis.

## Description

The invention relates to a process for producing electrical energy with a fuel cell having an improved efficiency.

### Background of the Invention

Fuel cells normally use hydrogen coming from a source of hydrogen like for example a hydrogen bottle and air as a source of oxygen, since air comprises about 21% of oxygen. The oxygen is extracted from the air by a so-called air management, which is bulky, heavy and does not produce very pure oxygen. Fuel cells, particularly the polymer electrolyte membrane (PEM) fuel cells are sensitive to the purity of the oxygen.

### Summary of the Invention

The main goal of the invention is to improve the efficiency of the production of electrical energy with a fuel cell.

Oxygen is oxygen. No matter whether it is "natural", i.e., if it comes from the ambient air, or if it was obtained by a physical, chemical or physicochemical method.

However, the inventor has discovered that its purity may have an incredible impact on some processes.

When making experiments on oxygen and the impacts of its purity, the inventor has surprisingly noticed that the use of pure oxygen instead of "air oxygen" in a fuel cell can increase by more than 100% the efficiency of the cell, in particular the amperage it provides.

On the basis of such an amazing result, the invention therefore proposes a process for producing electrical energy with a fuel cell supplied with hydrogen and a source of oxygen. The particularity of such a process is that the source of oxygen is a source of pure oxygen.

According to a preferred embodiment of the invention, the source of oxygen is a device for splitting water into hydrogen and oxygen by thermolysis.

According to another preferred embodiment of the invention, the oxygen comes from a device for splitting water into hydrogen and oxygen, comprising:
- a reactor having a heating system, a first reactor outlet, a second reactor outlet, at least one water inlet and at least one oxygen filter,
- at least one hydrogen filter,
- an oxygen extraction pump, a hydrogen extraction pump, at least one water injection pump, and
a hydrogen separation chamber located outside the reactor and containing the hydrogen filter(s).

Other features and advantages of the invention will now be described in detail in the following description, which refers to the appended figures that schematically show:
Fig. 1: a preferred device for splitting water into hydrogen and oxygen by thermolysis;
Fig. 2: the cell voltage of a conventional fuel cell as a function of the current density, when the source of oxygen is air; and
Fig. 3: the cell voltage of the same fuel cell as a function of the current density, when the source of oxygen is pure oxygen in accordance with the invention.

### Detailed description of the invention

By pure oxygen, it is herein meant oxygen having a purity of at least 99.99%.

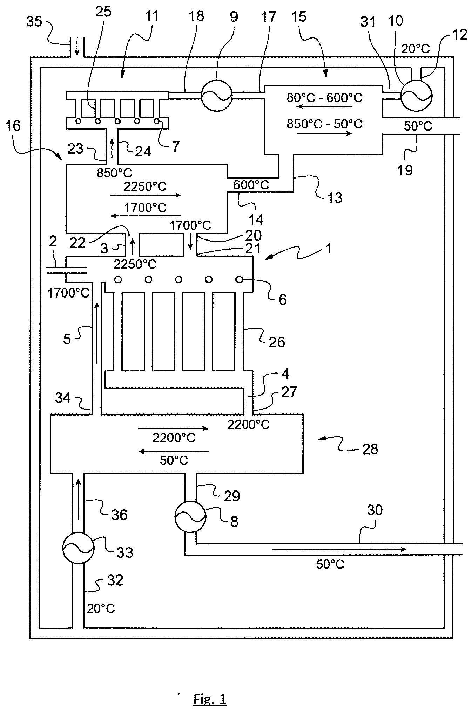

In Fig. 1 are plotted the values of the cell voltage in volts as a function of the current density in amperes delivered a conventional fuel cell supplied with air oxygen.

However, the precise constitution of the conventional fuel cell used is not significant since similar results can be obtained with any fuel cell.

The meaning of the abbreviations in the Figure are as follows:
LT-PEM: Low Temperature Polymer Electrolyte Membrane
MEA: Membrane Electrode Assembly
P: pressure
λH₂: wavelength of the spectral line
RH: relative humidity
λAir: wavelength of the air

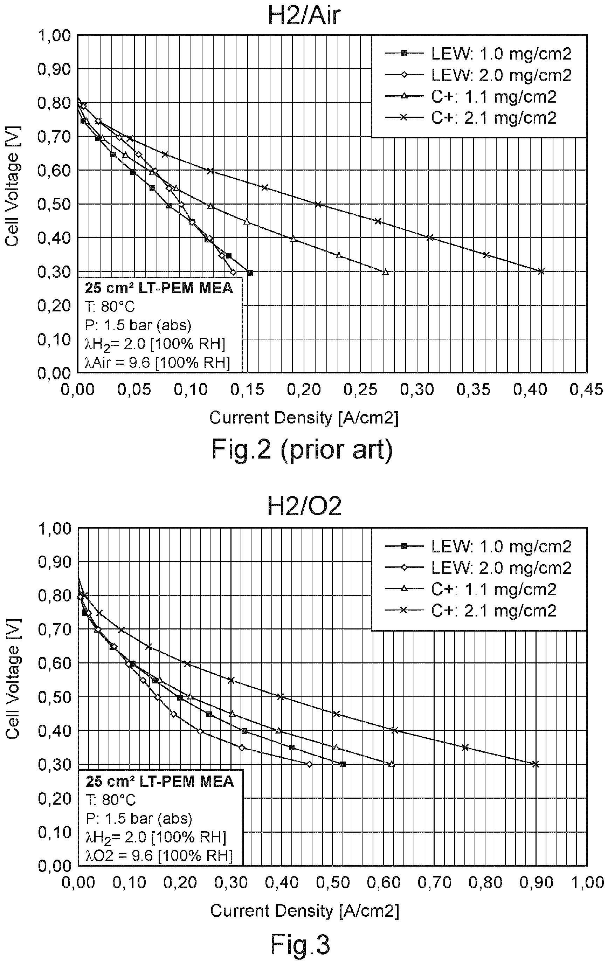

In Fig. 2 are plotted the values of the cell voltage in volts as a function of the current density in amperes delivered in the same conventional fuel cell as in Fig.1, but supplied with pure oxygen (purity greater than 99.99%).

The curves most on the right on the figures are the measurements with the indicated values of C+.

It appears from the comparison of the results that all values of the current density are higher in Fig. 2, i.e., when the cell is supplied with pure oxygen.

This is why it is of great advantage to use pure oxygen in a fuel cell instead of oxygen.

The pure oxygen may come from any source, like an oxygen source.

However, according to a preferred embodiment of the invention, the oxygen comes from a device for splitting water into hydrogen and oxygen by thermolysis.

Such a device is preferably a device comprising:
- a reactor 1 having a heating system 2, a first reactor outlet 3, a second reactor outlet 4, at least one water inlet 5 and at least one oxygen filter 6,
- at least one hydrogen filter 7,
- an oxygen extraction pump 8, a hydrogen extraction pump 9, at least one water injection pump 10,
and a hydrogen separation chamber 11 which is located outside the reactor 1 and contains the hydrogen filter(s) 7.

Preferably several hydrogen filters 7 and several oxygen filters 6 are used. They may be connected to a hydrogen manifold 25 and an oxygen manifold 26.

The hydrogen and oxygen filters 7,6 may consist in straight hollow tubes arranged horizontally, in order to avoid a significant temperature gradient between the ends of the tubes which preferably are integrated in the walls of the hydrogen separation chamber 11 and the reactor 1.

The filters 7,6 for hydrogen and oxygen may both be made of the same material which preferably is a known mixed ionic-electronic conducting (MIEC) ceramic membrane that can withstand very high temperatures. Another advantage of such filtering membranes is that when used at about 850°C they extract only molecular hydrogen whereas at about 2250°C they extract only molecular oxygen.

The device preferably comprises three heat exchangers in order to avoid energy losses and reuse the thermal energy of the gases to heat the liquid or gaseous water.

The heat exchangers are for example typical shell and tube heat exchangers and they each have an inlet and an outlet for a first circuit and an inlet and an outlet for a second circuit.

As can be seen in the figure, the inlet 31 of the first circuit of a first heat exchanger 15 is connected to a first external water inlet 12 via the water injection pump 10 and the outlet 13 of the first circuit of the first heat exchanger 15 is connected to the inlet 14 of a first circuit of a second heat exchanger 16, whereas the inlet 17 of the second circuit of the first heat exchanger 15 is connected to an outlet 18 of the hydrogen separation chamber 11 via the hydrogen extraction pump 9 and the outlet 19 of the second circuit of the first heat exchanger 15 is a hydrogen outlet of the device.

Thus, the first heat exchanger 15 allows on one hand, to reduce the exit temperature of the hydrogen extracted from the hydrogen separation chamber to less than 100 °C and preferably to about 50°C and, on the other hand, to transfer the energy recovered from the exiting hydrogen to the liquid low temperature (about 20°C) water entering through the first external water inlet 12.

The outlet 20 of the first circuit of the second heat exchanger 16 is connected to a second water inlet 21 of the reactor 1 and the inlet 22 of the second circuit of the second heat exchanger 16 is connected to the first reactor outlet 3 of the reactor 1 and the outlet 23 of the second circuit of the second heat exchanger 16 is connected to an inlet 24 of the hydrogen separation chamber 11.

Therefore, the second heat exchanger 16 uses the heat of the mixture of hydrogen and steam coming from the reactor 1 to further heat the already heated water or steam coming from first heat exchanger 15. At the same time, it cools the steam/hydrogen gas mixture before it enters the hydrogen separation chamber 11 so that the hydrogen filtering can take place through the MIEC membrane filters 7 at a lower temperature of about 850°C. The separated hydrogen collected by the hydrogen separation chamber outlet 18 connected to the membrane filters 7 via the manifold 25 can subsequently be pumped by the hydrogen extraction pump 9 and sent to the first heat exchanger 15.

The second reactor outlet 4 of the reactor 1 is connected to the oxygen filters 6 via the manifold 26 and to the inlet 27 of the first circuit of the third heat exchanger 28 and the outlet 29 of the first circuit of the third heat exchanger 28 is connected to the oxygen extraction pump 8 which is connected to the oxygen outlet 30 of the device,
- the inlet 36 of the second circuit of the third heat exchanger 28 is connected to a second external water inlet 32 via a second water injection pump 33 and
- the outlet 34 of the second circuit of the third heat exchanger 28 is connected to the water inlet 5 of the reactor 1.

As a result, the third heat exchanger 28 uses the heat of the oxygen coming from the reactor 1 to heat the cold water (about 20°C) entering from water inlet 32 and at the same time it cools the exiting oxygen to a temperature less than 100°C and preferably to about 50°C.

The oxygen molecules arrive at the filter wall where they split in O-ions (Wagner's law) which enter and hop into the vacancies/electron holes towards the center of the filter. When leaving the inside wall of the filter, they reconstitute into molecules which are sucked out through the opened end of the filter (the other end of the filter being closed).

The experiments that have been carried out by the inventor have demonstrated that the net energy needed to split 9 kg of water into 1 kg of H₂ and 8 kg of O₂, both obtained with a purity of 99,99%, is smaller than 45 kWh.

The first and second external water inlets 12,32 may be connected to a common general external water inlet 35.

The device of the invention is preferably provided with means for controlling the pumps, the heating system and optionally the partial pressures of hydrogen and oxygen.

The means are generally electronic means, in particular a computer implementing an appropriate software to control and optimize the splitting temperature of water and to increase the oxygen and hydrogen yields by acting on the heating system 2, on the oxygen and hydrogen extraction pumps 8,9, on the water injection pumps 10,33 and optionally on the partial pressures of the gases.

The computer maintains the balance between injected power and energy and the stable temperature in the reactor by checking the gas exit volumes and the water/steam injection.

When the device has reached a stable condition, the gas mixture in the reactor is made of 94% steam, about 4% H₂ and about 2% O₂, with traces of OH⁻, H⁺, and some H and O atoms).

As to the heating system, it comprises any appropriate (burner) heating unit, for example a known ultrahigh temperature (UHT) burner having an inlet connected to a mixture of a fuel and a comburent, and an outlet for the exhaust gases. It is activated by starting the combustion of the mixture.

The temperature must be sufficient high to cause the thermolysis of water in the reactor. Therefore, the fuel is generally composed of a combustible gas selected in the group consisting of unleaded gasoline, hydrogen, methanol, ethanol, methane, ethane, butane, propane and acetylene, the latter being preferred.

The comburent is air or oxygen, the latter being preferred.

Preferably the burner is supplied with a mixture of a fuel as above and oxygen as a part of the oxygen produced by device itself. Better results in terms of energy consumption are even obtained when the oxygen provided to the burner is still hot. The device may then be provided with an oxygen duct connecting the oxygen outlet of the device to the inlet of the burner in order to recirculate a part of the oxygen produced by the device to the inlet of the burner.

According to a preferred embodiment of the invention, the heat losses are minimized to the extreme by placing the device inside a vessel having a double wall and preferably an external ceramic insulation. Inside the vessel, all hot components are advantageously insulated by special ceramics having low heat conductivity (close to the 0.2 W/m² for water). The insulation is preferably arranged with wall at distances that choke the heat waves at a frequency corresponding to the temperatures in the delta space.

According to another preferred embodiment, the vessel has two walls (optionally insulated on the external side by a ceramic layer) separated by a space which is connected to a general water inlet 35 and the first and second external water inlets 12,32. This feature offers a very advantageous effect: the vessel acts as a whole cooling system because the water entering from the general water inlet circulates within the space between the walls before reaching the external water inlets 12,32 of the device. During that circulation the water absorbs heat, which on one hand, reduces the heat reaching the external wall of the vessel, and on the other hand, warms the water which thus needs less energy to reach the temperature needed for its splitting. Therefore, the energy (heat) lost by radiation of the external wall of the vessel is only 1.5-2%, the other energy loss being due to temperature of the gases (oxygen and hydrogen) exiting the vessel through the oxygen and hydrogen outlets 30,19.

### Splitting of water into hydrogen and oxygen

The splitting of water into hydrogen and oxygen may be carried out with the following steps:
- getting a device as described above,
- connecting the external water inlets 22,32 to a source of water,
- activating the heating system 2,
- controlling the heating system 2 and the flows through the pumps 8,9,10,33 to keep the temperature in the reactor 1 at more than 2000°C, preferably at a minimum of 2250°C, the temperature in the hydrogen separation chamber 11 at less than 1000°C, preferably at a maximum of 850°C, and the exit temperatures of hydrogen and oxygen at less than 100°C, preferably at a maximum of 50°C, and
- recovering oxygen and hydrogen at the oxygen and the hydrogen outlets 30,19, respectively.

According to a preferred embodiment, the heating system 2 is fed with a combustible gas, preferably acetylene, and oxygen, to ensure that a temperature exceeding 2200°C is reached.

In addition, the combustion of oxygen will reduce the flue gases of up to 75% in comparison with air, while diminishing the production of carbon dioxide of up to 75%.

The oxygen can advantageously be a part of the oxygen produced by the device which is recirculated to the heating system 2.

The oxygen duct connecting the oxygen outlet of the device to the inlet of the burner is preferably inside the vessel in order to avoid losses of thermal energy.

## Claims

1. A process for producing electrical energy with a fuel cell supplied with hydrogen and a source of oxygen, **characterized in that** the source of oxygen is a source of pure oxygen.

2. The process of claim 1, wherein the source of oxygen is a device for splitting water into hydrogen and oxygen by thermolysis.

3. The process of claim 2, wherein the device for splitting water into hydrogen and oxygen by thermolysis comprises:
- a reactor (1) having a heating system (2), a first reactor outlet (3), a second reactor outlet (4), at least one water inlet (5) and at least one oxygen filter (6),
- at least one hydrogen filter (7),
- an oxygen extraction pump (8), a hydrogen extraction pump (9), at least one water injection pump (10),
and a hydrogen separation chamber (11) located outside the reactor (1) and containing the hydrogen filter(s) (7).

4. The process of claim 3, wherein the device further comprises three heat exchangers (15,16,28) each comprising an inlet (31,14,27) and an outlet (13,20,29) for a first circuit and an inlet (17,22,36) and an outlet (19,23,34) for a second circuit.

5. The process of claim 4, wherein in the device:
- the inlet (31) of the first circuit of a first heat exchanger (15) is connected to an external water inlet (12) via the water injection pump (10), the outlet (13) of the first circuit of the first heat exchanger (15) is connected to the inlet (14) of a first circuit of a second heat exchanger (16),
- the inlet (17) of the second circuit of the first heat exchanger (15) is connected to an outlet (18) of the hydrogen separation chamber (11), which is connected to the filter(s) (7) and the outlet (19) of the second circuit of the first heat exchanger (15) is a hydrogen outlet of the device.

6. The process of claim 4 or 5, wherein in the device:
- the outlet (20) of the first circuit of the second heat exchanger (16) is connected to a second water inlet (21) of the reactor (1),
- the inlet (22) of the second circuit of the second heat exchanger (16) is connected to the first reactor outlet (3) of the reactor (1) and the outlet (23) of the second circuit of the second heat exchanger (16) is connected to an inlet (24) of the hydrogen separation chamber (11).

7. The process of claim 6, wherein in the device:
- the second reactor outlet (4) of the reactor (1) is connected is connected to the oxygen filter(s) (6) and to the inlet of the first circuit of the third heat exchanger (28) and the outlet (29) of the first circuit of the third heat exchanger (28) is connected to the oxygen extraction pump (8) which is connected to the oxygen outlet (30) of the device,
- the inlet (36) of the second circuit of the third heat exchanger (28) is connected to a second external water inlet (32) via a second water injection pump (33) and
- the outlet (34) of the second circuit of the third heat exchanger (28) is connected to the water inlet (5) of the reactor (1).

8. The process of claim 7, wherein in the device:
a hydrogen manifold (25) is connected between the filter(s) (7) and the outlet (18) of the hydrogen separation chamber (11) and an oxygen manifold (26) is connected between the filter(s) (6) and the second outlet (4) of the reactor (1).

9. The process of claim 8, wherein in the device the filter for oxygen (6) and the filter (s) for hydrogen (7) are both straight hollow tubes arranged horizontally.

10. The process of claim 9, wherein in the device the ends of the oxygen filter(s) (6) is/are integrated in the walls of the reactor (1).

11. The process of any one of claim 3 to 10, wherein in the device the filter (s) for oxygen (6) and the filter (s) for hydrogen (7) are both made of the same material.

12. The process of any one of claims 3 to 11, wherein the device further comprises means for controlling the pumps (8,9,10,33), the heating system (2) and optionally the partial pressures of hydrogen and oxygen.

13. The process of any one of claims 3 to 12, wherein the device is contained within a vessel having two walls separated by a space which is connected to a general water inlet (35) and the first and second external water inlets (12,32).

14. The process of any one of claims 3 to 13, comprising the step of controlling the heating system (2) and the pumps (8,9,10,33) of the device to keep the temperature in the reactor (1) at more than 2000°C, preferably at a minimum of 2250°C, the temperature in the hydrogen separation chamber (11) at less than 1000°C, preferably at a maximum of 850°C, and the exit temperatures of hydrogen and oxygen at less than 100°C, preferably at a maximum of 50°C, and
- recovering oxygen and hydrogen at the oxygen and the hydrogen outlets (30,19), respectively.

15. The process of any one of claims 3 to 14, wherein the heating system (2) of the device is fed with a combustible gas and oxygen and wherein preferably a part of the oxygen produced is recirculated to the heating system (2).
